Europäisches Patentamt

European Patent Office

Office européen des brevets

(11) Veröffentlichungsnummer: **0 343 674**

**A1**

(12) # EUROPÄISCHE PATENTANMELDUNG

(21) Anmeldenummer: **89109476.5**

(51) Int. Cl.⁴: **B01D 53/34**

(22) Anmeldetag: **26.05.89**

(30) Priorität: 26.05.88 CS 3594/88

(43) Veröffentlichungstag der Anmeldung:
29.11.89 Patentblatt 89/48

(84) Benannte Vertragsstaaten:
AT BE CH DE ES FR GB IT LI NL SE

(71) Anmelder: **JEDNOTNE ZEMEDELSKE DRUZSTVO PODHAJI se sidlem v Lutonine PSC 763 13(CS)**

(72) Erfinder: **Smély CSc, Zdenek, Dipl.-Ing. Ostromecská 395/5 Praha 3(CS)**

(74) Vertreter: **Patentanwälte Beetz sen. - Beetz jun. Timpe - Siegfried - Schmitt-Fumian- Mayr Steinsdorfstrasse 10 D-8000 München 22(DE)**

(54) **Verfahren und Einrichtung zur Reinigung der Gasgemische von Kohlenwasserstoffen und deren Derivaten mittels fester Absorbenten.**

(57) Die Einrichtung, versehen mit einer Ansaugleitung (1) des Gasgemisches in einen Separator (2) zur Abscheidung der dispergierten festen Teile, der an einen Vorreinigungsknoten (3) zur Reinigung von üblichen gasförmigen Schadstoffen angeschlossen ist, kennzeichnet sich dadurch, daß eine Verbindungsleitung (1a) für die Zuleitung von vorgereinigtem Gasgemisch an eine Reinigungsgruppe (4) angeschlossen ist, die Schichten von toxische und cancerogene Verbindungen absorbierenden Stoffen enthält, von da ein weiterer Teil der Verbindungsleitung (1a) zu einer Gebläseeinrichtung oder zu einem Ventilator (5), die bzw. der den Strom des Gasgemischs sichert, und weiterhin in eine Erwärmungsvorrichtung (6) führt, die den Auslaß der gereinigten und erneut erwärmten Gasgemische durch eine Abzugsleitung (7) in einen Kamin (8) ermöglicht, wobei zwischen der Reinigungsgruppe (4) und dem Ventilator (5) im Falle einer Kombination mit der Reinigung mittels flüssiger Dispersionen der absorbierenden Stoffe ein Zerstreuungsreiniger (4a) und ein Abscheider (4b) zur Abscheidung von kleinen Teilchen der flüssigen Dispersionen der Absorbenten angebracht sind.

FIG.2

Xerox Copy Centre

## Verfahren und Einrichtung zur Reinigung der Gasgemische von Kohlenwasserstoffen und deren Derivaten mittels fester Absorbenten

Die Erfindung betrifft ein Verfahren und eine Einrichtung zur Reinigung von Gasgemischen, insbesondere von Rauchgasen der Müllverbrennungsanlagen, von Kohlenwasserstoffen, vor allem aromatischen, und deren Derivaten mit toxischen und cancerogenen Wirkungen, besonders aus der Gruppe der Dioxine, mittels fester Absorbenten.

Die bisherigen Verfahren zur Abscheidung von toxischen Stoffen aus Gasgemischen, besonders aus den in Müllverbrennungsanlagen, Krematorien usw. entstehenden Verbrennungsgasen, umfassen vor allem übliche Methoden der Abscheidung solcher gasförmigen oder leicht flüchtigen Stoffe, wie Schwefeldioxid, Schwefeltrioxid, Stickstoffoxide, Chloride der flüchtigen Metalle usw. Eine ernste Gefahr für die weite Umgebung bedeuten jedoch toxische Stoffe auf der Basis der Kohlenwasserstoffe, besonders mit kondensierten und kumulierten aromatischen Strukturen und deren Derivaten, substituiert durch Halogenelemente, durch Gruppen, die Schwefel, Stickstoff, Sauerstoff, Phosphor eventuell andere Elemente enthalten. Ein Teil dieser Stoffe ist cancerogen oder anders hoch toxisch, wie zum Beispiel die Stoffe vom Typ Dioxin. Deren Abscheidung aus den Gasgemischen ist demzufolge auch vom ökologischen Standpunkt sehr wichtig, zugleich aber auch schwierig. In einigen Fällen kann man deren Menge in der Luft auf ein Minimum unter die Grenze der gefährlichen Konzentration beschränken, und zwar durch Hochtemperaturverbrennung oder durch Zersetzung mittels katalytischer Systeme.

Das Hochtemperaturverfahren der Liquidierung der Schadstoffe in Rauch- oder Pyrolysengasen ist in den Offenlegungsschriften DE 34 26 059 A1 und 35 04 810 A1 enthalten, aber wegen der Notwendigkeit, die Temperatur von Gasgemischen über 1000 °C bis oberhalb von 1200 °C zu steigern, sind beide Methoden energetisch sehr anspruchsvoll und daher mit bedeutenden Nachteilen verbunden. Nebst diesen Methoden ist es notwendig, auf das Adsorptionsverfahren zur Beseitigung der alkali-metallischen Verunreinigungen aus Rauchgasen hinzuweisen, das in der Offenlegungsschrift DE 314957 A1 enthalten ist, das aber bloß ein Teilproblem der Beseitung der korrosiven Wirkung dieser Verunreinigung auf diejenige Einrichtung löst, welche beim Verbrennungsprozeß der Energieerzeugung dient (bei Gasturbinen).

Die angeführten und weitere Mängel der bisher bekannten Methoden werden durch das Verfahren und die entsprechende Einrichtung gemäß der Erfindung behoben, die es ermöglicht, die Aufgabe der Reinigung der Rauchgase besonders aus Müllverbrennungsanlagen in zwei Phasen zu teilen, von denen die erste die Vorreinigung von festen dispergierten Teilchen (einschließlich der alkali-metallischen Unreinheiten), Flugasche und üblichen Schadstoffen vorstellt und in deren zweiter Phase die übriggebliebenen toxischen Elemente in feste bzw. teilweise flüssige Absorbenten abgeschieden werden, so daß die Hochtemperaturverbrennung oder die Zersetzung auf katalytischen Systemen bzw. die Entfernung mittels Lagerung auf ökologisch sicheren Orten bloß auf toxische in den Absorbenten kumulierte Stoffe beschränkt werden kann, d. h. der Größenordnung nach auf unvergleichbar kleinere Massenmengen im Vergleich mit dem Gesamtumfang der in der entsprechenden Verbrennungseinheit (Müllverbrennungsanlage, Kraftwerk, Heizwerk) entstehenden Verbrennungsgase.

Das Wesen des Verfahrens zur Reinigung von Gasgemischen gemäß der Erfindung, deren Zweck die Abscheidung der Kohlenwasserstoffe aus Rauchgasen darstellt, besonders von aromatischen Kohlenwasserstoffen und deren Derivaten mit toxischen und cancerogenen Wirkungen, insbesondere von Verbindungen aus der Gruppe der Dioxine, nach Vorreinigung von festen dispergierten Teilchen und von den üblichen gasförmigen Schadstoffen, d. h. von Schwefeldioxid, Schwefeltrioxid, Stickstoffoxiden und Chlorwasserstoff, besteht darin, daß eine oder mehrere Schichten einer oder mehrerer Sorten von festen Absorbenten in Berührung mit dem Strom der der Reinigung unterworfenen Gasgemische gebracht werden. Diese Absorbenten bestehen aus Polymeren mit einer linearen oder räumlichen chemischen Struktur, besonders von aliphatischen, aromatischen oder heterozyklischen Verbindungen, die eventuell zum Teil durch Halogenelemente substituiert oder durch chemische Substituenten modifiziert werden, die Schwefel, Stickstoff, Sauerstoff oder Phosphor enthalten; ferner können sie aus Polykondensaten und/oder aus Kunststoff- oder Elastomer- Oligomeren einschließlich des Abfalles von benützten und auch regenerierten Gummi- und Kunststoffmassen bestehen. Die angeführten Schichten des Absorbenten, zerkleinert, granuliert oder anderweitig mechanisch adaptiert zwecks Erreichung einer möglichst großen Oberfläche, werden auf gasdurchlässige Art auf Tragkonstruktionen angebracht, die der Art des benützten Absorbenten durch die Form, das Konstruktionsmaterial und die Anordnung entsprechen, wie z. B. auf Netzen, Stangen, gelöcherten oder profilierten Platten bzw. werden zwecks Steigerung der Absorptionswirkung auf die Absorbententräger mit einer großen bzw. gegliederten Oberfläche, wie Koks, Bruchstücke von porösem Steinzeug, auf flüssige Stoffe oder Lösungen aufgetragen, insbesondere viskose Mineralöle, Oligomere und aufgelöste makromolekulare Stoffe (Polymere). Durch Absorption auf der großen Oberfläche des Absorbenten wird eine intenstive Abscheidung der schädlichen Verbindungen aus den gereinigten Gasgemischen infolge deren Affinität zu den Komponenten der angeführten festen und flüssigen Absorbenten erzielt.

Zwecks Erreichung einer intensiveren Abscheidung der toxischen Stoffe aus nichtgekühlten oder nur teilweise gekühlten Verbrennungsgasen werden auf den Tragkonstruktionen Absorbenten aus der Gruppe der thermisch widerstandsfähigen Polymere, wie z. B. Polyphenylenoxid, Polyimine und Polymere heterozyklischer Verbindungen angebracht. Insofern es sich um das Auftragen von Polymeren oder Polykondensaten auf die Absorbententräger handelt, kann dies entweder auf physikalische Art erfolgen, z. B. durch Benetzung in der Lösung eines makromolekularen Stoffes mit nachfolgender Abdampfung des Lösungsmittels, durch Bespritzen mit der Schmelze (Schoopieren), Dampfkondensation, oder auf chemische Art, zum Beispiel durch Polymerisation- oder Polykondensationreaktion; die Dicke der aufgetragenen Polymer-, Polykondensations- oder Oligomerschicht kann sich von einer monomolekularen Schicht bis zu Millimeter- oder Zentimeterschichten bewegen. Die organischen Moleküle des Absorbenten können auch nachträglich auf deren Oberfläche durch die Einwirkung von verschiedenen Reagenzien chemisch modifiziert werden, die ihre physikalisch-chemische Affinität zu organischen Kohlenwasserstoffen und deren Derivaten, die in den Gasgemischen enthalten sind, steigern; eine solche nachträgliche chemische Aktivierung kann auch durch Teil-Chlorierung des festen Absorbenten erfolgen.

Eine weitere Variante der Effektivitätssteigerung des Verfahrens gemäß der Erfindung besteht in der Kombination oder Ergänzung des oben erwähnten Verfahrens zur Reinigung von Gasgemischen durch die Reinigung mittels flüssiger Dispersionen oder Emulsionen von Stoffen, die physikalisch-chemisch mit toxischen Kohlenwasserstoffen dioxinischen Typs und mit cancerogenen in den Gasgemischen enthaltenen Stoffen verwandt sind. Die Absorptionsstoffe mit eingefangenen Dioxinen aus Gasgemischen werden von Zeit zu Zeit ausgetauscht und an ökologisch sicheren Orten gelagert oder durch bekannte Hochtemperatur- bzw. Plasmaverbrennungsmethoden verbrannt oder anders von den eingefangenen Toxinen desaktiviert.

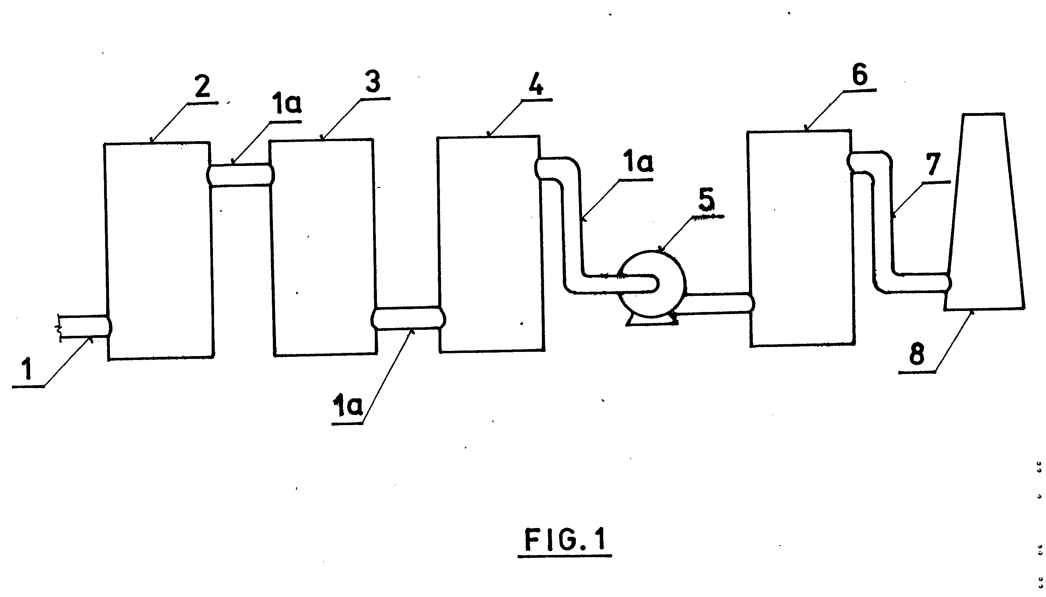

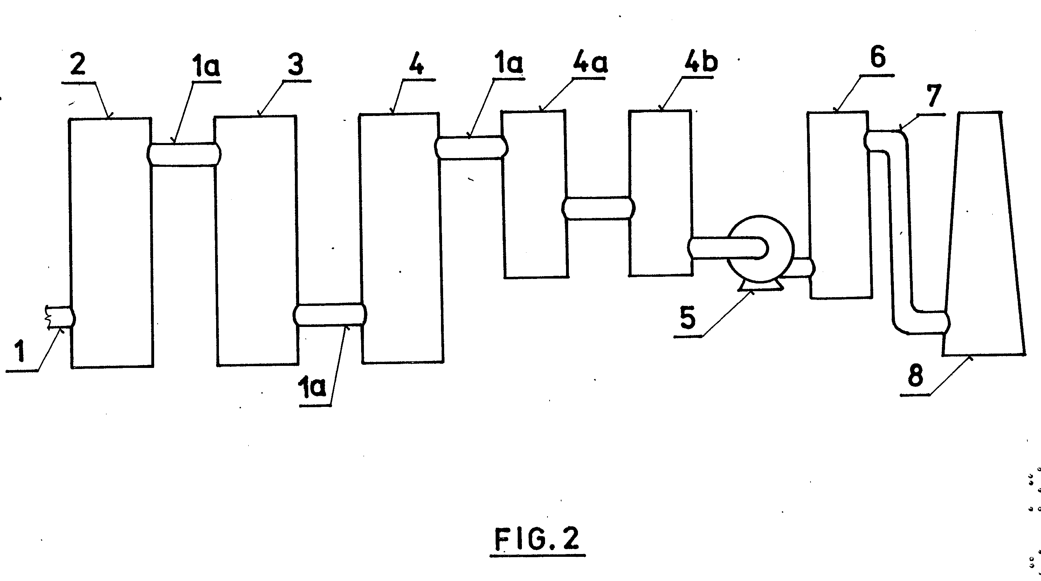

Die Einrichtung zur Durchführung des Verfahrens zur Reinigung von Gasgemischen gemäß der Erfindung ist schematisch in Fig. 1 als Ausführungsbeispiel ausschließlich mittels fester Absorbenten dargestellt, während in Fig. 2 eine Kombination des angeführten Verfahrens mit der Reinigung mittels flüssiger Dispersionen (Emulsionen) der Absorptionsstoffe veranschaulicht ist. Nach diesen Ausführungsbeispielen tritt das Gasgemisch durch die Ansaugleitung 1 in den Separator 2 zur Abscheidung der dispergierten festen Teilchen, der mit dem Abkühlungsknoten kombiniert werden kann, und von dort wird es durch die Verbindungsleitung 1a in den Vorreinigungsknoten 3 gebracht zwecks Reinigung von üblichen gasförmigen Schadstoffen (Schwefeldioxid, Schwefeltrioxid, Stickstoffoxide, Chlorwasserstoff u. a.) und gelangt danach in die eigentliche Reinigungsgruppe 4, die Schichten von Stoffen enthält, die toxische und cancerogene Verbindungen absorbieren. Diese Reinigungsgruppe 4 ist durch einen weiteren Teil der Verbindungsleitung 1a an die Gebläseeinrichtung oder an den Ventilator 5 zwecks Sicherung des Gasgemischablaufes und von da an die Erwärmungsvorrichtung 6 angeschlossen, die es ermöglicht, daß die erneut erwärmten und gereinigten Gase durch die Abzugsleitung 7 in den Kamin 8 abgeführt werden. Das in Fig. 2 veranschaulichte Ausführungsbeispiel stimmt mit dem nach Fig. 1 überein mit der Ausnahme, daß zwischen der Reinigungsgruppe 4 und dem Ventilator 5 Elemente für die Nachabscheidung der Gasgemische von den Überbleibseln von toxischen Verbindungen mittels flüssiger Dispersionen (Emulsionen) angebracht sind, und zwar der Zerstreuungsreiniger 4a und der Abscheider 4b, die aus den gereinigten Gasen die mitgerissenen kleinen Teilchen der Dispersion oder Emulsion (in Form von feinen flüssigen Teilchen der zersplitterten Substanz oder des Nebels) abscheiden.

Die Reinigung der Gasgemische von Kohlenwasserstoffen und deren Derivaten, d. h. von toxischen und cancerogenen Verbindungen mittels fester Absorbenten bildet eine Alternative zu deren Reinigung mittels flüssiger Dispersionen und Emulsionen von ähnlichen Absorptionsstoffen, besitzt jedoch im Vergleich mit der letzteren bestimmte Vorteile, besonders in dem Sinne, daß sie eine einfachere Einrichtung ohne Türme mit der Zerrspritzapparatur beansprucht und daß deren trockene Art der Absorption keine mit der Korrosion der Metallelemente innerhalb des Reinigungsmechanismus verbundenen Probleme hervorruft. Überdies ermöglicht ein solches zweckmäßiges Verfahren, daß der Strom des vorgereinigten Gasgemisches, das zum Durchgang durch eine notwendige Anzahl von Schichten des zerkleinerten festen Absorbenten angetrieben wird, so orientiert werden kann, daß das eintretende Gasgemisch mit vollem Inhalt von Toxinen in Berührung mit der am längsten ausgenützten Schicht des festen Absorbenten gebracht wird, die die höchste Konzentration der abgeschiedenen toxischen Verbindungen enthält, während die abgehenden Gase in Berührung mit den Schichten gelangen, die einen minimalen Inhalt von abgeschiedenen toxischen Stoffen enthalten.

Wenn es sich in konkreten Fällen als zweckmäßig erweist, die beiden Vefahren in gegenseitiger Kombination zu benützen, wird von dem Verfahren der trockenen Absorption, ergänzt durch Nachreinigung mittels flüssiger Dispersionen, wie in Fig. 2 veranschaulicht, Gebrauch gemacht.

## Ansprüche

1. Verfahren zur Reinigung von Gasgemischen, besonders von Rauchgasen aus Müllverbrennungsanlagen, von Kohlenwasserstoffen, vor allem aromatischen und deren Derivaten mit toxischen und cancerogenen Wirkungen, insbesondere von Verbindungen aus der Gruppe der Dioxine nach Vorabscheidung von festen dispergierten Teilchen und von den üblichen gasförmigen Schadstoffen, d. h. Schwefeldioxid, Schwefeltrioxid, Stickstoffoxiden und Chlorwasserstoff, **dadurch gekennzeichnet,** daß eine oder mehrere Schichten einer oder mehrerer Sorten von festen absorbierenden Stoffen, bestehend aus Polymeren mit einer linearen oder räumlichen chemischen Struktur, insbesondere von aliphatischen, aromatischen oder heterozyklischen Verbindungen, beziehungsweise zum Teil durch Halogen-Elemente substituiert oder durch chemische Substituenten modifiziert, die Schwefel, Stickstoff, Sauerstoff oder Phosphor enthalten, und/oder aus Oligomeren, dem Abfall von benützten und auch regenerierten Gummi- und Kunststoffmassen, derart in Berührung mit einem Strom der zu reinigenden Gasgemische gebracht werden, daß diese Schichten aus zerkleinerten, granulierten oder anders chemisch zwecks Erreichung einer möglichst großen Oberfläche adaptierten Absorbenten auf gasdurchlässige Art an Konstruktionen, die durch ihre Form, das Konstruktionsmaterial und die Zusammenstellung der benützten Absorbentensorte entsprechen, wie zum Beispiel auf Netzen, Stangen, gelöcherten oder profilierten Platten angebracht werden oder daß zwecks Steigerung der Absorptionswirkung auf die Absorbententräger mit einer verhältnismäßig großen oder gegliederten Oberfläche, wie zum Beispiel Koks und Bruchstücke von porösem Steinzeug, flüssige Stoffe, vor allem viskose Mineralöle und Oligomere und aufgelöste makromolekulare Stoffe, aufgetragen werden, wodurch man die Abscheidung von schädlichen Verbindungen aus den gereinigten Gasgemischen infolge deren Affinität zu den Elementen der angeführten Absorbenten erreicht.

2. Verfahren nach Anspruch 1, **dadurch gekennzeichnet,** daß zwecks einer wirkungsvolleren Abscheidung von Schadstoffen aus nichtgekühlten Verbrennungsgasen oder aus anderen heißen Gasgemischen auf den Tragkonstruktionen Absorbenten aus der Gruppe der thermisch widerstandsfähigen Polymere, wie zum Beispiel Polyphenylenoxid, Polyimine und Polymere auf der Basis von heterozyklischen Verbindungen angebracht werden, und zwecks einer wirkungsvolleren Abscheidung von Schadstoffen allgemein die Auftragung von flüssigen Stoffen und aufgelösten makromolekularen Stoffen auf die Absorbententräger auf physikalische und chemische Art, wie Benetzen, Bespritzen, Dampfkondensation, Polymerisations- und Polykondensationsreaktion, durchgeführt wird.

3. Verfahren nach Anspruch 1 oder 2, **dadurch gekennzeichnet,** daß zwecks einer wirkungsvolleren Abscheidung von Schadstoffen das Verfahren der Reinigung mittels fester Absorbenten durch ein Reinigungsverfahren mittels flüssiger Dispersionen der absorbierenden Stoffe ergänzt wird und daß die festen und flüssigen Absorbenten mit den abgeschiedenen Schadstoffen periodisch ausgetauscht und an ökologisch sicheren Orten gelagert oder durch bekannte Hochtemperatur- bzw. Plasma-Verfahren verbrannt oder auf andere Art von den abgeschiedenen Toxinen desaktiviert werden.

4. Einrichtung zur Durchführung des Verfahrens nach einem der Ansprüche 1 bis 3, mit einer Ansaugleitung des Gasgemischs in einen Separator zur Abscheidung der dispergierten festen Teile, der mit einem Abkühlungsknoten kombiniert werden kann und der weiter an einen Vorreinigungsknoten zur Reinigung von üblichen gasförmigen Schadstoffen angeschlossen ist, **dadurch gekennzeichnet,** daß eine Verbindungsleitung (1a) für die Zuleitung von vorgereinigtem Gasgemisch an eine Reinigungsgruppe (4) angeschlossen ist, die Schichten von toxische und cancerogene Verbindungen absorbierenden Stoffen enthält, von da ein weiterer Teil der Verbindungsleitung (1a) zu einer Gebläseeinrichtung oder zu einem Ventilator (5), die bzw. der den Strom des Gasgemischs sichert, und weiterhin in eine Erwärmungsvorrichtung (6) führt, die den Auslaß der gereinigten und erneut erwärmten Gasgemische durch eine Abzugsleitung (7) in einen Kamin (8) ermöglicht, wobei zwischen der Reinigungsgruppe (4) und dem Ventilator (5) im Falle einer Kombination mit der Reinigung mittels flüssiger Dispersionen der absorbierenden Stoffe ein Zerstreuungsreiniger (4a) und ein Abscheider (4b) zur Abscheidung von kleinen Teilchen der flüssigen Dispersionen der Absorbenten angebracht sind.

FIG.1

Neu eingereicht / Newly filed
Nouvellement déposé

EP 0 343 674 A1

FIG. 2

EP 0 343 674 A1

Neu eingereicht / Newly filed
Nouvellement déposé

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 434 879 (SAGAMI CHEMICAL RESEARCH CENTER) * Ansprüche * --- | 1,2 | B 01 D 53/34 |
| A | US-A-4 374 814 (N. GAYLAND) * Ansprüche * --- | 1,2 | |
| A | EP-A-0 090 563 (MINNESOTA MINING) * Ansprüche * --- | 1,2 | |
| A | GB-A-1 554 052 (A. ILICHVULIKH) * Ansprüche * --- | 1,2 | |
| A | DE-A-3 632 366 (F. BÖLSING) * Ansprüche * ----- | 1,2 | |

RECHERCHIERTE SACHGEBIETE (Int. Cl.4)

B 01 D

Der vorliegende Recherchenbericht wurde für alle Patentansprüche erstellt

| Recherchenort | Abschlußdatum der Recherche | Prüfer |
|---|---|---|
| DEN HAAG | 17-08-1989 | KANOLDT W.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................................
& : Mitglied der gleichen Patentfamilie, übereinstimmendes Dokument

EPO FORM 1503 03.82 (P0403)